# EUROPEAN PATENT APPLICATION

(11) **EP 1 407 823 A2**
(43) Date of publication of application: **14.04.2004**
(21) Application number: 03078159.5
(22) Date of filing: 09.10.2003
(51) Int. Cl.: B05B 7/04, B29B 7/74

(54) **Dispensing appliance**

(30) Priority: 09.10.2002 BE 200200582
(71) Applicant: Soudan Patrimonium & Consulting N.V., 9800 Deinze (BE)
(72) Inventor: Soudan, Freddy, 9800 Deinze (BE)
(74) Representative: Quintelier, Claude

(57) **Abstract**

Dispensing appliance (1), in particular a dispensing gun, comprising a first (5) and a second (6) chamber, each provided with an inlet for feeding in under pressure a first and a second component respectively, which first (5) and second (6) chambers in each case comprise a closable first (9) and second (10) outlet and are connected to a mixing chamber (18) provided for mixing the first and second components, an intermediate piece (3) being fitted on the above mentioned first (9) and second (10) outlets, which intermediate piece (3) is provided with a first (12) and a second (13) channel, which channels in each case extend between the first (9) and second outlets (10) and an inlet of the mixing chamber (18), which intermediate piece (3) is detachably connected to an extension piece (4) provided with a hollow space that can be closed off by the intermediate piece in order to form a mixing chamber (18) in this way.

## Description

The invention relates to a dispensing appliance, in particular a dispensing gun, comprising a first and a second chamber, each provided with an inlet for feeding in under pressure a first and a second component respectively, which first and second chambers in each case comprise a closable first and second outlet and are connected to a mixing chamber provided for mixing the first and second components.

Such a dispensing appliance is known from US Patent 3,784,110. In the case of the known dispensing appliance the components to be mixed, in the main urethane foam with a boiling point below 0° C, are mixed in the mixing chamber. The components are fed to the mixing chamber by way of closable chambers, the closure of which is operated by a handle. Mixing the two components will enable the foam formed to harden. The components are stored in separate, closed pressure vessels. During the combination of the two components in the mixing chamber and the exposure of these components to normal atmospheric pressure the gases dissolved in them undergo a sudden transition from the liquid phase to the gas phase. This purely physical process causes a pre-expansion in the two components individually. This expansion facilitates the intensive mixing of the two components, during which the known polyurethane exothermic reaction proceeds further.

The foam thus formed can be used for various purposes, such as, for example, for fixing doors and windows, for insulation and packaging, and also for spraying against walls or partitions. In the case of the known appliances steel disposable bottles and a disposable plastic dispensing gun are used.

The known appliances have the disadvantage that not only are chemical residues left behind in the disposable bottles in which the components are stored, but also, through loss of the internal pressure, clogging up or incorrect use, up to 30 % of the contents of the pressure bottles is often left behind, which is harmful to the environment. Disposing of these pressure bottles in accordance with the present environmental legislation is very expensive, or is totally impossible.

In the context of proper compliance with environmental legislation, these disposable pressure bottles must be replaced by refillable, durable pressure bottles. These refillable pressure bottles are provided with a safety valve and with an inlet valve. This inlet valve makes it possible when the pressure bottle is only partially empty to bring the pressure in the bottle back up to the desired level, so that the bottle can be emptied almost completely.

The use of disposable guns is therefore also no longer consistent with the use of refillable, durable pressure bottles. However, disposable guns have the advantage that, because of their single use, no problem with clogging up arises owing to the presence of a solidified mixture in the mixing chamber.

The object of the invention is to achieve a dispensing appliance in the case of which the number of disposable components is minimized, but without the user constantly being faced with a problem of a clogged-up appliance during use. To that end, a dispensing appliance according to the invention is characterised in that an intermediate piece is fitted on the above mentioned first and second outlets, which intermediate piece is provided with a first and a second channel, which channels in each case extend between the first and second outlets and an inlet of the mixing chamber, which intermediate piece is detachably connected to an extension piece provided with a hollow space that can be closed off by the intermediate piece in order to form a mixing chamber in this way. The use of a detachable extension piece provided with a hollow space in which the mixing chamber is formed after closure by the intermediate piece means that only the extension piece has to be replaced, since the intermediate piece forms a division between the outlets of the two chambers and the mixing chamber. The fact is that, because the two components run in separate channels in the intermediate piece, no mixing occurs there, so that the outlets of the chambers cannot become clogged up with solidified foam.

A first preferred embodiment of a dispensing appliance according to the invention is characterised in that the above mentioned first and second channels widen in cross section in the direction of the above mentioned outlet towards the above mentioned mixing chamber. Owing to the fact that both channels widen, a pre-expansion of the components can already occur in the channels, which is beneficial for the subsequent mixing.

The first and the second channels preferably have a conical geometry. The conical geometry is excellent for achieving a continuous pre-expansion of the components.

A second preferred embodiment of a dispensing appliance according to the invention is characterised in that the first and the second channel are disposed at an angle to each other, which angle lies between 20 and 60 degrees. This means that the intermediate piece can remain compact in dimensions.

A third preferred embodiment of a dispensing appliance according to the invention is characterised in that the first and the second chamber can each be closed off by means of a pin, which pin projects through the above mentioned outlet of the chamber. Through the use of a pin that projects through the outlet, the head of the pin will go into said intermediate piece, as a result of which it is ensured that the head of the pin, as it were, scrapes the outlet of the chamber clean when it is being closed off. This makes clogging up of the chamber outlet considerably more difficult.

The first and the second channel are preferably in each case directed towards an inner shell of the mixing chamber, which gives rise to better mixing in the mixing chamber.

The invention will now be described in greater detail with reference to an exemplary embodiment shown in the drawing, in which drawing:
Figure 1 shows a cross section through a dispensing appliance according to the invention;
Figure 2 shows a cross section through one of the chambers;
Figure 3 shows a detail of the outlet of one of the chambers;
Figure 4 shows an outlet of the intermediate piece;
Figure 5 shows a connecting member on a refillable pressure bottle;
Figure 6 shows a further embodiment of a chamber as part of the dispensing appliance; and
Figures 7, 8, 9 and 10 show embodiments in which a further mixing element is fitted in the channel.

In the drawing an identical or similar element is given the same reference numeral.

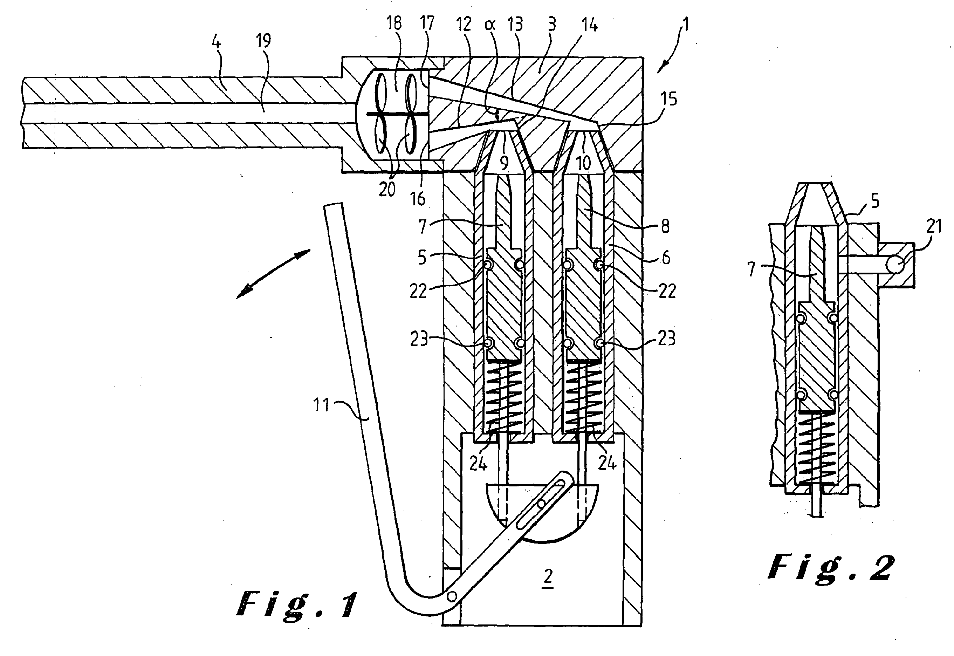

Figure 1 shows a cross section through an example of a dispensing element 1 according to the invention. The dispensing element 1 comprises in the main a feed and control element 2, an intermediate piece 3 and an extension piece 4, which are set up in succession in a position fitting together.

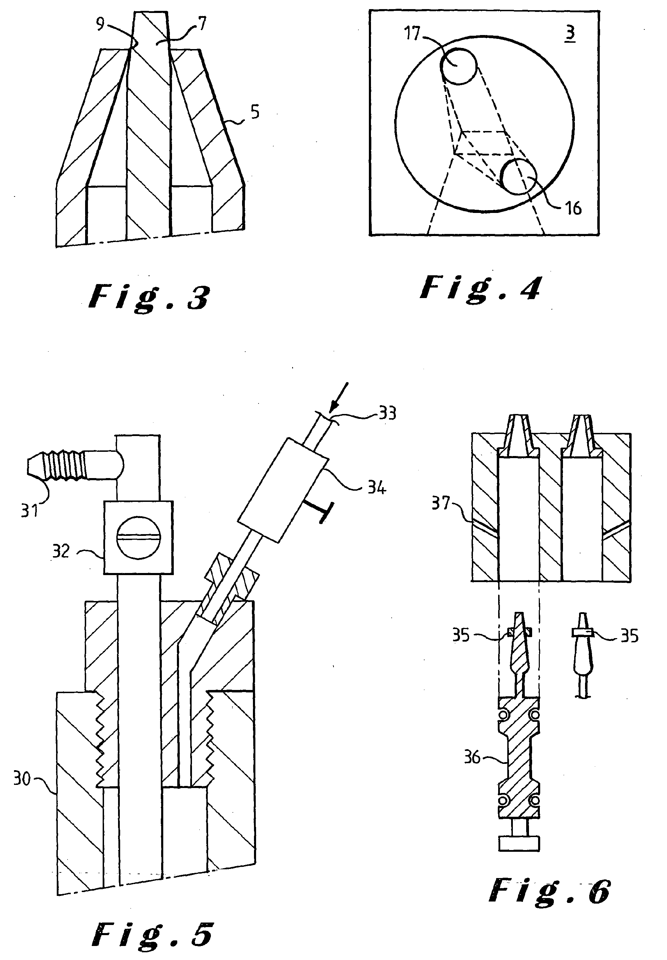

The feed and control element 2 comprises a first chamber 5 and a second chamber 6. Each chamber has an inlet 21 for feeding in a first and a second component respectively. For the sake of simplicity, only one of the two chambers with its inlet is shown in Figure 2. The components are preferably urethane and a hardener, so that in this way, through mixing, urethane foam can be formed. Each chamber comprises an outlet 9, 10 that can be closed off. In the exemplary embodiment shown the outlet can be closed off by means of a pin 7, 8. As shown in Figure 3, in the closed position of the chamber the head of the pin 7 projects through the outlet. In this way the pin does not close off the chamber by forming complementary conical contact faces, but by a minimal surface contact within the outlet, which has a more obtuse angle than that of the pin, which pin is of a slightly conical shape. The pin comes out almost 2 mm above the close-off face, so that, should component remain adhering at the outlet, the closure cannot become clogged up. On its head part, the pin preferably has a diameter of 1.5 mm, while outlets 9 and 10 of the first and second chambers have a diameter of 2.0 mm. Owing to the fact that the pin increases conically in diameter from its head part onwards, the pin then closes off the outlet on passing through the latter. The movement of the pin through the outlet makes metering of the component possible.

Each pin 7, 8 is preferably provided with two O-rings 22 and 23, which serve as seals and scraper rings. Both pins are connected to a handle 11, for operating the movement of the pins in the chamber. Each pin is further associated with a spring 24, which ensures that the pins return to the rest position, i.e. the closed position of the chamber, after operation. Although in the figure one spring is provided for each pin, it is, of course, also possible to operate the two pins with a common spring.

Figure 6 shows a variant of a chamber in which the pin is provided with a thickening 35, for example in the form of a ring made of Teflon®, which fits into a head part of the chamber that is also made of Teflon®. The pin is further provided with a narrowing 36 on its body, which narrowing is provided between the two O-rings. The chambers are further each provided with an intake 36 for feeding in a lubricating and solvent product, such as, for example, Mesamol®. In that way this product can be applied along the body of the pin, in order to lubricate the pin movement.

The intermediate piece 3 is provided on the head of the first and second chambers 5, 6. The intermediate piece is provided detachably on feed and control element 2 and, for example, connected to the latter by way of a clip or screw. The intermediate piece comprises a first channel 12 and a second channel 13. An inlet 14 and 15 of the first and second channels respectively connects to the outlet 9 and 10 respectively of the first chamber 5 and second chamber 6 respectively. Each of the channels is provided with an outlet 16, 17, which opens out at the inlet of a mixing chamber 18 provided in the extension piece 4.

The intermediate piece 3 is preferably made of plastic, such as, for example, Teflon®. This has the advantage that this piece is not only cheap to manufacture, but is also easy to clean.

The first and the second channel 12, 13 can have a cylindrical or rectangular geometry, but they preferably have a conical geometry, in the case of which the diameter widens in the direction from the outlet of the chambers towards the mixing chamber. The minimum cross section of the conical channel is preferably almost three times greater at the end than it is at the beginning. This last geometry has the advantage that a pre-expansion of the components can occur already in the channels, without the components becoming mixed. This is because the widening diameter of each channel will cause the pressure to reduce, with the result that expansion of the components can occur.

In order to give the dispensing appliance the geometry of a gun and in this way make it easier to operate, the intermediate piece preferably forms a corner piece between the feed and control element 2 and the extension piece 4.

The channels are preferably provided at an angle of 20° ≤ α ≤ 60 relative to each other, the second channel 13 extending partially above the first channel 12. The mutually slanting arrangement of the channels also means that the outlets of the channels in each case are directed towards an inner shell of the mixing chamber. Figure 4 illustrates how the channels open out at extremities disposed virtually diagonally opposite each other.

As shown in Figure 1, the inlets 14 and 15 of the intermediate piece are provided in conical openings of said intermediate piece. Said openings are formed in such a way that they join up closely with the head of the first and second chambers 5 and 6, so that they are a close fit on it.

The outlets of the channels from the intermediate piece open into the mixing chamber 18, which is part of the extension piece 4, which is detachably connected to the intermediate piece. The extension piece 4 is mounted on the intermediate piece by means of friction, for example in a press fit. The extension piece comprises a hollow space that is part of the mixing chamber 18. The latter preferably has a spherical side 25 situated opposite the outlet of the intermediate piece. In this way, when the intermediate piece is mounted, the mixing chamber is formed by the hollow space and closed off by the intermediate piece. One or more static mixing blades 20 are preferably provided in the mixing chamber, in order to improve the mixing of the components fed in. A tubular channel 19 connects an outlet of the mixing chamber, provided on the spherical side 25, to a nozzle of the extension piece. A mixing element (not shown in the figure) is preferably provided in said nozzle, in order to mix the components further with each other. Said mixing element is formed by, for example, a coil.

When the dispensing appliance according to the invention is being used, the chambers 5 and 6 are opened by means of the handle 11, so that the components, which are supplied under pressure, flow into the channels 12 and 13. Owing to the fact that the channels widen in diameter, the components already undergo a pre-expansion there. When they arrive in the mixing chamber 18, the mixing - and therefore the foaming - occurs, this being promoted by the presence of the mixing blades. Demarcated by the intermediate piece and the nozzle, the space 18 acts as a mixing and expansion chamber. The available volume of the mixing chamber causes a sudden fall of pressure in the components, which have undergone a pre-expansion, with the result that increased expansion is obtained. Owing to the fact that the components are squirted at oblique angles against the inner shell of the mixing chamber and the space of the mixing chamber has a spherical side, a turbulent mixing is achieved through rebounding of the expanding jet movement on the mixing blades. The increasing penetration of expanding components and the accelerated expansion forces the two components to leave the mixing chamber, intensively mixed, by way of the nozzle.

The use of an intermediate piece ensures that clogging up of the closure of the chambers is prevented. The two components are guided separately into said intermediate piece towards its end, where they arrive in the mixing chamber formed in this way. The conical channels 4 produce an accelerated pre-expansion of the two products, before they come into contact with each other. The intermediate piece itself is easy to remove and easy to clean by immersion in solvent, or can be replaced preventively with a new piece, since the cost of such a piece is quite low. The extension piece is also easy either to clean or to replace. It is cleaned preferably by means of a solvent or with compressed air.

The intermediate piece with the conical access to the chambers forms a barrier against clogging up. If one component comes into contact with the other at the start of the conical inlet, hardening occurs. Since this hardening is accompanied by an increase in volume, it extends towards the outlet of the conical channels, seeing as there is not a closed mixing chamber after the removal of the extension piece. The necessary mixing ratio for producing really solidified foam cannot come through as far as the outlets of the chambers. It is clear in this context that it is the chamber outlets that have to be protected from any contact with the other component.

Figure 5 illustrates an embodiment of a pressure bottle 30 in which one of the components is stored. The pressure bottle is provided with an outlet 31 that is closable by means of a valve 32. The pressure bottle further has an inlet 33 provided with a further shut-off valve 34. Inlet 33 is provided in order to feed in a gas under pressure, preferably N₂, in order to build up the pressure in the pressure bottle again should that pressure be insufficient to make the component come out of the bottle.

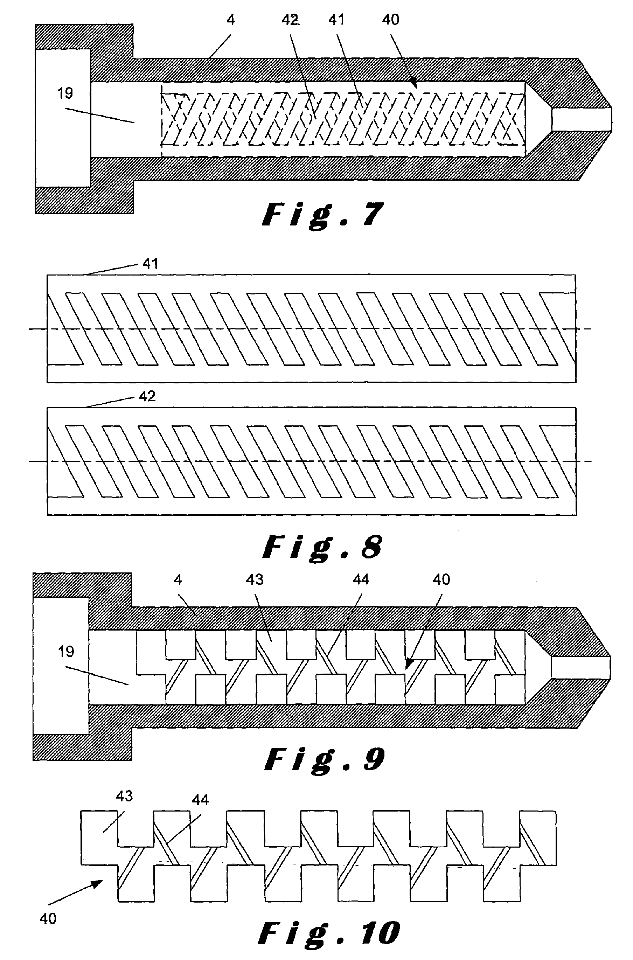

Figure 7 illustrates an embodiment of the tubular channel 19, in this case a further mixing element 40 being provided in the channel. The further mixing element comprises a first part 41 and a second part 42, as shown in Figure 8. The further mixing element extends substantially in the longitudinal direction of the channel and each part has a profile that is, as it were, constructed from successive slanting vanes. As shown in Figure 7, the first and second parts are provided next to each other in the channel, in such a way that a serpentine pattern, as it were, is produced. Through the presence of this further mixing element, the path that the components cover in the channel 19 is considerably lengthened, with the result that a better mix is formed. If desired, the mixing blades 20 can be dispensed with in this last embodiment. The use of a first and second part has the advantage that these parts can be slid more easily in and out of the channel, and are therefore easier to clean.

Of course, it is also possible to make the further mixing element from one part, instead of two parts.

Figures 9 and 10 show a further embodiment of the further mixing element, a square-wave-shaped pattern 43 being provided in the wall of the channel 19. A substantially sawtooth-shaped channel 44 extends in the channel 19, in which channel 44 the components coming from the mixing chamber 18 are mixed.

## Claims

1. Dispensing appliance, in particular a dispensing gun, comprising a first and a second chamber, each provided with an inlet for feeding in under pressure a first and a second component respectively, which first and second chambers in each case comprise a closable first and second outlet and are connected to a mixing chamber provided for mixing the first and second components, **characterised in that** an intermediate piece is fitted on the above mentioned first and second outlets, which intermediate piece is provided with a first and a second channel, which channels in each case extend between the first and second outlets and an inlet of the mixing chamber, which intermediate piece is detachably connected to an extension piece provided with a hollow space that can be closed off by the intermediate piece in order to form a mixing chamber in this way.

2. Dispensing appliance according to Claim 1, **characterised in that** the above mentioned first and second channels widen in cross section in the direction of the above mentioned outlet towards the above mentioned mixing chamber.

3. Dispensing appliance according to Claim 1 or 2, **characterised in that** the above mentioned first and second channels have a conical geometry.

4. Dispensing appliance according to one of Claims 1 to 3, **characterised in that** the above mentioned first and second channels are disposed at an angle to each other, which angle lies between 20 and 60 degrees.

5. Dispensing appliance according to one of Claims 1 to 4, **characterised in that** the above mentioned first and second chambers in each case can be closed off by means of a pin, which pin projects through the above mentioned outlet of the chamber.

6. Dispensing appliance according to one of Claims 1 to 5, **characterised in that** the above mentioned first and second channels in each case are directed towards an inner shell of the mixing chamber

7. Dispensing appliance according to one of Claims 1 to 6, **characterised in that** the above mentioned mixing chamber is provided with at least one mixing blade.

8. Dispensing appliance according to one of Claims 1 to 7, **characterised in that** the above mentioned mixing chamber opens into a nozzle of the extension piece, in which nozzle a mixing element is provided.

9. Dispensing appliance according to one of Claims 1 to 8, **characterised in that** the above mentioned extension piece is provided with a tubular channel that starts from an outlet of the mixing chamber, which channel is provided with a further mixing element.

10. Dispensing appliance according to Claim 9, **characterised in that** the above mentioned further mixing element has a substantially sawtooth-shaped profile that extends in the longitudinal direction of the channel.

11. Dispensing appliance according to Claim 8 or 9, **characterised in that** the above mentioned further mixing element comprises a first and a second part, each of which parts comprises a substantially vane-shaped profile that extends in the longitudinal direction of the channel, the first and second parts being mounted with their end faces next to each other.
